## Europäisches Patentamt
## European Patent Office
## Office européen des brevets

(19)

(11) Numéro de publication: **0 187 084**
**B1**

(12) # FASCICULE DE BREVET EUROPEEN

(45) Date de publication du fascicule du brevet: **01.06.88**

(51) Int. Cl.⁴: **B 60 K 17/24**, F 16 D 3/20

(21) Numéro de dépôt: **85402447.8**

(22) Date de dépôt: **10.12.85**

(54) **Dispositif de liaison d'un élément de joint homocinétique avec un arbre de sortie.**

(30) Priorité: **11.12.84 FR 8418871**

(43) Date de publication de la demande:
**09.07.86 Bulletin 86/28**

(45) Mention de la délivrance du brevet:
**01.06.88 Bulletin 88/22**

(84) Etats contractants désignés:
**BE DE GB IT**

(56) Documents cités:
**FR - A - 2 212 879**
**FR - A - 2 374 180**
**FR - A - 2 502 270**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Lucca, Giulio, 2, Allée Racine,**
**F-91160 Longjumeau (FR)**

(74) Mandataire: **Ernst-Schonberg, Michel et al, RNUR -**
**S. 0804 B.P. 103, F-92109 Boulogne-Billancourt (FR)**

EP 0 187 084 B1

## Description

L'invention concerne un dispositif de liaison d'un élément de joint homocinétique avec un arbre de sortie latéral d'un mécanisme différentiel et concerne plus particulièrement la liaison d'un élément de joint homocinétique portant une bride de fermeture et de fixation avec une autre bride solidaire de l'arbre de sortie.

Une telle liaison connue par les publications FR-A 2 374 180 et 2 212 879, fait usage de vis d'assemblage qui sont soumises à des efforts de cisaillement au cours de la transmission du couple d'entraînement communiquée par ledit arbre, par exemple aux roues d'un véhicule.

Les variations et la transmission du couple d'entraînement nécessitent l'emploi de nombreuses vis disposées à la périphérie de la bride de fixation dont la mise en place augmente la durée de montage de l'élément de joint homocinétique et l'encombrement radial des brides.

L'invention a pour objet un dispositif de liaison simplifié d'encombrement radial réduit qui ne met en œuvre qu'un nombre réduit d'organes d'assemblage.

Selon l'invention, la face de la bride de fermeture et de fixation, tournée vers l'arbre de sortie, possède un profil d'entraînement, en contact facial et avec le profil homologue porté par la face de la bride solidaire de l'arbre de sortie.

La liaison ainsi réalisée assure la transmission du couple par les bords d'entraînement respectifs du profil et de la bride de fermeture et de fixation du joint homocinétique. Par voie de conséquence les vis d'assemblage qui ne sont plus soumises aux efforts de cisaillement peuvent être utilisées en nombre plus réduit sur une bride d'encombrement radial plus faible.

Selon un mode de réalisation de l'invention adaptée aux arbres de sortie de mécanismes différentiels existants, le profil d'entraînement de la bride de fermeture et de fixation est en contact avec le profil homologue porté par la face d'une plaque dont l'autre face est confondue avec celle de la bride solidaire de l'arbre de sortie.

'D'autres caractéristiques et avantages de l'invention ressortiront de la description qui va suivre, donnée à titre d'exemple non limitatif en référence des dessins annexés sur lesquels:

la fig. 1 est une représentation vue en coupe axiale de la liaison d'un élément de joint homocinétique avec une bride solidaire de l'arbre de sortie d'un mécanisme différentiel qui fait intervenir une plaque portant le profil d'entraînement de la bride de fermeture et de fixation de l'élément de joint,

les fig. 2 et 3 sont représentatives des faces opposées de la plaque,

la fig. 4 est une vue de la face d'assemblage de la bride de fermeture et de fixation.

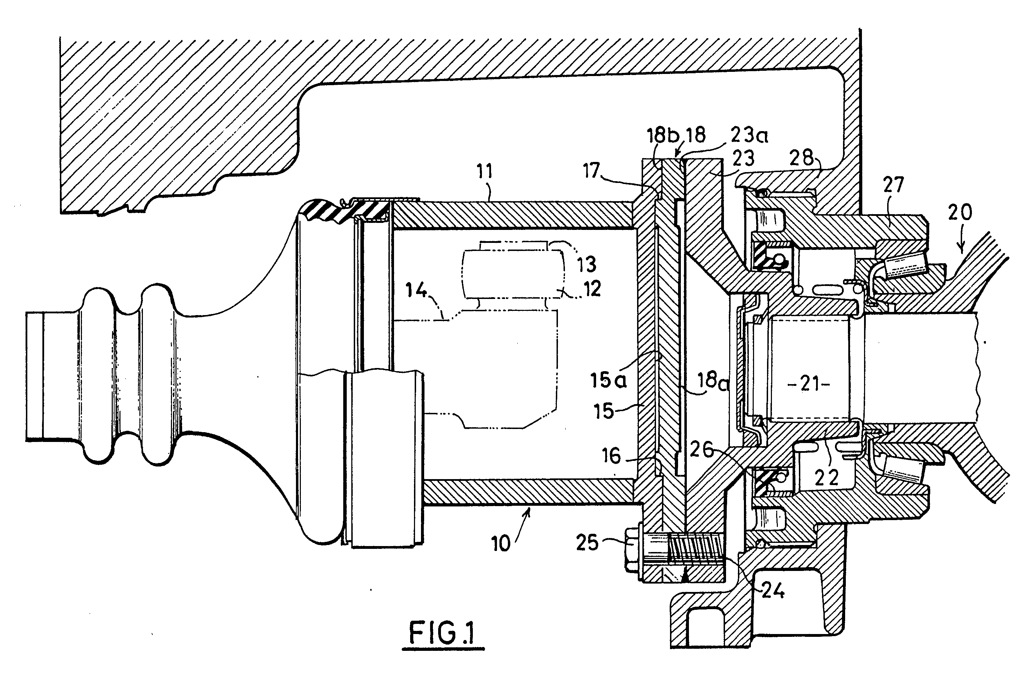

Sur la figure 1, l'arbre de sortie latéral 21 d'un mécanisme différentiel 20 porte une extrémité cannelée sur laquelle est monté un moyeu 22 muni d'une extension radiale conformée en une bride de fixation 23. La bride 23 comporte sur sa périphérie des trous taraudés 24 recevant les vis d'assemblage 25 avec l'élément de joint homocinétique 10. Selon un mode de réalisation connu le moyeu 22 possède une portée d'étanchéité sur laquelle repose le joint d'étanchéité 26 d'un palier 27 vissé dans le carter 28 du mécanisme 20.

L'élément de joint homocinétique 10 possède une structure connue par la publication FR-A 2 502 270.

Selon le montage illustré, l'élément 10 est constitué par un corps 11 en forme de fourreau obtenu de préférence par formage et de forme générale trilobée délimitant trois chemins de roulement pour des galets 12 montés sur des tourillons 13 prévus à l'extrémité d'un arbre 14.

Le fourreau est obturé au moyen d'un fond rapporté conformé en une bride de fermeture et de fixation 15 rigidement relié au moyeu des vis 25 à la bride de fixation 23 solidaire de l'arbre de sortie 21.

Selon l'invention, la face 15a de la bride de fermeture et de fixation 15 tournée vers l'arbre de sortie 21 possède un profil d'entraînement 16 en contact facial avec le profil homologue 17 porté par la face 23a de la bride 23.

Selon l'exemple de réalisation représenté au dessin, le profil d'entraînement 17 est situé sur la face 18b d'une plaque 18 dont la deuxième face 18a est confondue avec la face 23a de la bride 23.

La face 18a de la plaque 18 est rigidement reliée par exemple au moyen d'une soudure à la face 23a de la bride 23 avec laquelle elle est ainsi confondue. Sans sortir du cadre de l'invention, il est bien évident que la face 23a pourra porter directement le profil d'entraînement 17.

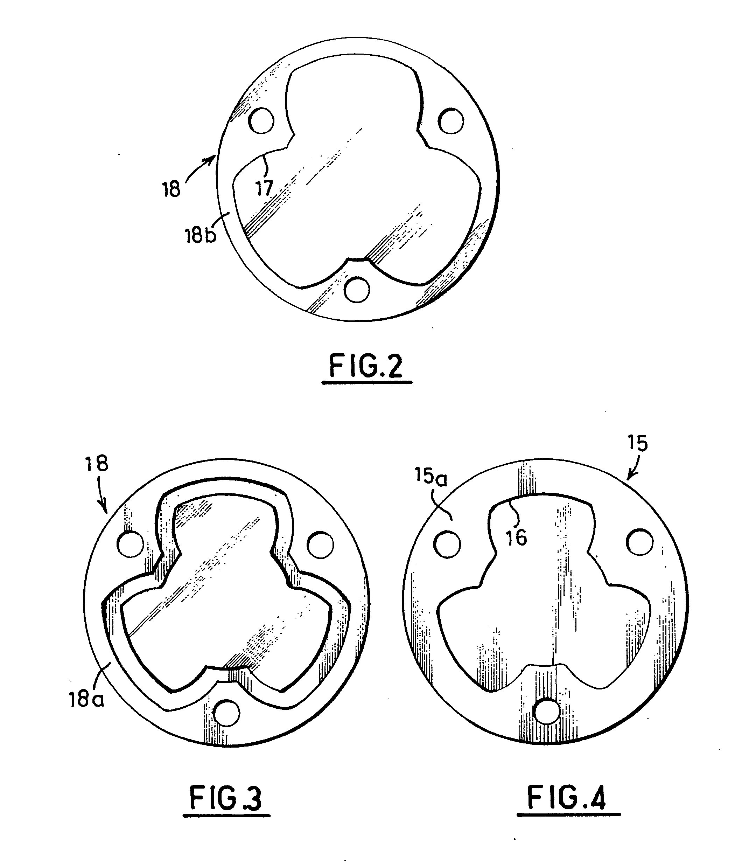

En référence des figures 2 et 3, le profil d'entraînement 17 est formé sur un bossage façonné sur la face 18b de la plaque 18.

L'autre profil 16 est constitué par une empreinte façonnée sur la face 15a de la bride de fermeture 15.

Selon un aspect de l'invention, la bride de fermeture 15 et la plaque 18 sont identiques et le profil 16 de l'une est ajusté au profil 17 de l'autre.

Selon une autre caractéristique de l'invention, l'empreinte et le bossage portés par la bride de fermeture 15 et par la plaque 18 possèdent une configuration à lobes ajustable à la section lobée du fourreau 11.

Le procédé de fabrication simultané des profils 16, 17 s'effectue au cours du processus de façonnage d'un flan de tôle découpé aux dimensions radiales de la bride 23 dans lequel sont percés les passages des vis 25 situées entre les divers lobes et à la périphérie de la plaque 18.

Le processus de façonnage de la plaque est également celui de la bride de fermeture et de fixation 15.

Sans sortir du cadre de l'invention, il est bien évident que l'orientation faciale représentée de la bride 15 et de la plaque 18 est purement arbitraire et que l'une et l'autre pourraient tout aussi bien occuper l'orientation selon laquelle le bossage de la plaque serait ajusté à l'empreinte homologue portée par la bride 23 tandis que l'empreinte de la même plaque 18 serait ajustée au bossage correspondant porté par la bride de fermeture et de fixation 15.

## Revendications

1. Dispositif de liaison d'un élément de joint homocinétique (10) avec un arbre de sortie latéral (21) d'un mécanisme différentiel (20) dans lequel ledit élément de joint homocinétique (10) porte une bride de fermeture et de fixation (15) rigidement reliée à une autre bride (23) solidaire dudit arbre de sortie (21), caractérisé par le fait que la face (15a) de la bride de fermeture et de fixation (15) tournée vers l'arbre de sortie (21), possède un profil d'entraînement (16), en contact facial avec un profil homologue (17) porté par la face (23a) de la bride (23) solidaire de l'arbre de sortie (21).

2. Dispositif de liaison selon la revendication 1 caractérisé par le fait que le profil d'entraînement (17) porté par la face (23a) de la bride (23) solidaire de l'arbre de sortie (21) est situé sur l'une des faces (18b) d'une plaque (18) dont l'autre face (18a) est confondue avec celle (23a) de ladite bride (23).

3. Dispositif de liaison selon la revendication 1 ou 2, caractérisé par le fait que les divers profils d'entraînement (16, 17) font partie d'une empreinte et d'un bossage ajustés l'un à l'autre.

4. Dispositif de liaison selon la revendication 3, caractérisé par le fait que l'empreinte et le bossage sont portés par les faces opposées de la bride de fermeture et de fixation (15) de l'élément de joint homocinétique et par les faces de la plaque (18).

5. Dispositif de liaison selon la revendication (4), caractérisé par le fait que l'empreinte et le bossage possèdent une configuration à lobes.

6. Dispositif de liaison selon l'une quelconque des revendications 1 à 5 caractérisé par le fait que les profils d'entraînement (16, 17) respectivement constitués par empreinte et bossage sont réalisés simultanément par emboutissage d'un même flan de tôle.

7. Dispositif de liaison selon l'une quelconque des revendications 1 à 6 caractérisé par le fait que la configuration de la bride de fermeture et de fixation (15) de l'élément de joint homocinétique est identique à celle de la plaque (18).

8. Dispositif de liaison selon la revendication 4 ou 5 caractérisé par le fait que le corps (11) de l'élément de joint homocinétique (10) possède une section transversale ajustée à l'un des profils portés par de fermeture et de fixation (15) dudit élément de joint.

## Patentansprüche

1. Verbindungsvorrichtung zwischen einem homokinetischen Gelenk (10) und einer seitlichen Ausgangswelle (21) eines Differentialmechanismus (20), bei dem das homokinetische Gelenk (10) einen Abschluss- und Befestigungsflansch (15) aufweist, der fest mit einem anderen Flansch (23) verbunden ist, der mit der Ausgangswelle (21) fest verbunden ist, dadurch gekennzeichnet, dass die Fläche (15a) des Abschluss- und Befestigungsflanschs (15), die der Ausgangswelle (21) zugewandt ist, ein Antriebsprofil (16) aufweist, das im Flächenkontakt ist mit einem angepassten Profil (17) auf der Fläche (23a) des mit der Ausgangswelle (21) fest verbundenen Flansches (23).

2. Verbindungsvorrichtung nach Anspruch 1, dadurch gekennzeichnet, dass das Antriebsprofil (17) auf der Fläche (23a) des fest mit der Ausgangswelle (21) verbundenen Flansches (23) auf einer der Flächen (18b) einer Platte (18) vorgesehen ist, dessen andere Fläche (18a) mit derjenigen (23a) des Flansches (23) zusammenfällt.

3. Verbindungsvorrichtung nach Anspruch 1 oder 2, dadurch gekennzeichnet, dass die verschiedenen Antriebsprofile (16, 17) Teile von aneinander angepassten Aussparungen bzw. Erhöhungen sind.

4. Verbindungsvorrichtung nach Anspruch 3, dadurch gekennzeichnet, dass die Aussparung und die Erhöhung von den sich gegenüberliegenden Flächen des Abschluss- und Befestigungsflansches (15) des homokinetischen Gelenks und von den Plattenflächen (18) getragen werden.

5. Verbindungsvorrichtung nach Anspruch 4, dadurch gekennzeichnet, dass die Aussparung und die Erhöhung eine bogenförmige Struktur aufweisen.

6. Verbindungsvorrichtung nach einem der Ansprüche 1 bis 5, dadurch gekennzeichnet, dass die Antriebsprofile (16, 17), die aus Aussparungen bzw. Erhöhungen bestehen, gleichzeitig durch einen Tiefziehvorgang einer Blechplatine erhalten werden.

7. Verbindungsvorrichtung nach einem der Ansprüche 1 bis 6, dadurch gekennzeichnet, dass die Ausgestaltung des Abschluss- und Befestigungsflansches (16) des homokinetischen Gelenks identisch mit derjenigen der Platte (18) ist.

8. Verbindungsvorrichtung nach Anspruch 4 oder 5, dadurch gekennzeichnet, dass der Körper (11) des homokinetischen Gelenks (10) einen Querschnitt aufweist, der an eines der vom Abschluss- und Befestigungsflansch (15) getragenen Profile des Gelenks angepasst ist.

## Claims

1. An arrangement for connecting a constant velocity joint element (10) to a lateral output shaft (21) of a differential mechanism (20) in which said constant velocity joint element (10) carries a closure and fixing flange (15) rigidly connected to another flange (23) which is fixed with respect to said output shaft (21) characterised in that the face (15a) of the closure and fixing flange (15) which is towards the output shaft (21) has a drive profile (16) in face contact with a homologuous profile (17) carried by the face (23a) of the flange (23) which is fixed with respect to the output shaft (21).

2. A connecting arrangement according to claim 1 characterised in that the drive profile (17) carried by the face (23a) of the flange (23) which is fixed with respect to the output shaft (21) is disposed on one of the faces (18b) of a plate (18), the other face (18a) of which is coincident with that (23a) of said flange (23).

3. A connecting arrangement according to claim 1 or claim 2 characterised in that the various drive profiles (16, 17) are part of a recess portion and a boss portion which fit to each other.

4. A connecting arrangement according to claim 3 characterised in that the recess portion and the boss portion ar carried by the oppositely disposed faces of the closure and fixing flange (15) of the constant velocity joint element and by the faces of the plate (18).

5. A connecting arrangement according to claim 4 characterised in that the recess portion and the boss portion have a lobe-forming configuration.

6. A connecting arrangement according to any one of claims 1 to 5 characterised in that the drive profiles (16, 17) which are respectively formed by a recess portion and a boss portion are produced simultaneously by stamping the same metal plate blank.

7. A connecting arrangement according to any one of claims 1 to 6 characterised in that the configuration of the closure and fixing flange (15) of the constant velocity joint element is identical to that of the plate (18).

8. A connecting arrangement according to claim 4 or claim 5 characterised in that the body (11) of the constant velocity joint element (10) is of a cross section which is adapted to one of the profiles carried by the closure and fixing flange (15) of said joint element.

FIG.1

0 187 084

FIG.2

FIG.3

FIG.4

7